(19) Europäisches Patentamt
European Patent Office
Office européen des brevets

(11) Publication number: **0 135 043**
**B1**

(12) # EUROPEAN PATENT SPECIFICATION

(45) Date of publication of patent specification: **30.09.87**

(51) Int. Cl.⁴: **A 62 D 3/00,** B 01 D 15/00, C 07 B 61/00

(21) Application number: **84108597.0**

(22) Date of filing: **20.07.84**

(54) **A continuous decontamination-decomposition process for treating halogenated organic compounds and toxid substances.**

(30) Priority: **22.07.83 IT 2221583**

(43) Date of publication of application:
**27.03.85 Bulletin 85/13**

(45) Publication of the grant of the patent:
**30.09.87 Bulletin 87/40**

(84) Designated Contracting States:
**AT BE CH DE FR GB IT LI LU NL SE**

(56) References cited:
**EP-A-0 023 111**
**EP-A-0 060 089**
**US-A-4 351 718**

(73) Proprietor: **SEA MARCONI TECHNOLOGIES S.p.a.**
**Strada Antica di Collegno, 196**
**Torino (IT)**

(72) Inventor: **Tundo, Pietro**
**Strada Antica di Collegno, 196**
**Torino (IT)**

(74) Representative: **Bianchetti, Giuseppe**
**Studio Consulenza Brevettuale Via Rossini, 8**
**I-20122 Milan (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 043 B1

**Description**

This invention relates to a device suitable for use in decontaminating industrial oils contaminated with polyhalogenated organic compounds such as polychloro-biphenyls (PCB), dioxins, DDT, polychlorobenzofurans, etc..., by a continuous process, in closed or open systems.

A primary field of application of the device in accordance with the invention is in processing and decontaminating dielectric fluids that are utilized in electrical apparatus such as high, mean and low voltage condensers or transformers, although a number of other applications are possible for the device of the invention.

EP—A—0060089 discloses a method for the decontamination of halogenated organic compounds by reaction with a reagent consisting of an alkali metal hydroxide and of a polyglycol or monoalkyl ether thereof.

Said method requires the presence of oxygen and cannot be used therefore in a closed system.

Processing dielectric fluids in accordance with this invention permits decontamination of the fluids to be carried out in a continuous manner without requiring interruptions in operation of the electrical apparatus containing the fluid to be processed, while, at the same time, both the dielectric and the chemical-physical properties of the fluid are significantly improved. Decontamination will take place at either room temperature or the working temperature of the apparatus to be decontaminated, which obviously results in the advantage that the process is easy and economical to carry out as compared with conventional vacuum treatments.

Our EP—A—0118858 (priorities: 10.03.83, 06.06.84; date of filing: 03.03.84; publication: 19.09.84) discloses a dehalogenation process that comprises contacting the polyhalogenated compounds (DDT, PCB, dioxins, etc...) to be be decomposed, with a reagent consisting of polyethylene glycol, alcohols or polyhydroxilated compounds, an alkaline or alkaline-earth carbonate or bicarbonate, and an oxidizing agent or radical source, in the absence of oxygen.

The above process is especially suitable for use in decontaminating accidentally polluted surfaces (grounds, buildings, etc...), by the deposition of a thin layer of reagent onto the concerned surface, or for discontinuously treating industrial oils in closed or open reactors.

It has now been found that the above described reagent, once having been adsorbed on a suitable solid carrier, will remain practically captured therein and is not released therefrom when a continuous flow of mineral oil is caused to pass through it. It is thus possible, according to the invention, to prepare a solid reactive bed which is capable of decontaminating a mineral oil containing the toxic polyhalogenated substances by a continuous process.

The supported reagent is charged into appropriate receptacles (cartridges, columns, etc...) and the fluid to be decontaminated is made to pass through it. The treatment may comprise a single run or several repeated runs through the supported reagent, according to the operating conditions and the application concerned. The continuous cyclic process may be automatized so as to be, for example, discontinued when analysis of the treated oil indicates that the minimum preset decontamination threshold is exceeded.

Thus, these cartridge devices provided with the solid decontaminating bed can be conveniently used in conjunction with dielectric contaminating fluid-containing apparatus such as transformers or condensers, to treat said fluid.

There may be also more than one decontaminating cartridge or column, and the decontaminating cartridges or columns may be series or parallel arranged and be easily replaced when a bed is exhausted. It has been surprisingly found that the reaction products of the PCBs with the reagent are fixedly retained on the solid bed and, thus, they do not merely replace the PCBs in the mineral oil but are removed therefrom. The dehalogenated products are normally adsorbed and retained on the reactive bed. A schematic diagram of a plant according to the invention is shown in the figure of the accompanying drawing. The figure is a schematic view of an exemplificative embodiment of a plant including a device according to the invention, comprising an inlet valve 1 for the oil to be decontaminated; a mechanical filter 2 before the inlet of a pump 3 provided with a bypass; columns 4 and 5 containing the solid reagent for the dehalogenation reaction; degassing tower 6 under vacuum; outlet oil pump 7; a mechanical filter 8 for the decontaminated oil; sampling valve 9; an outlet valve 10 for the decontaminated oil; and a high or low (−20°/−45°C) temperature condenser; a vacuum generator 12 and a filter 13 protecting the gas outlet of the vacuum generator.

If a physical decontamination including a dehumidification and a degassing process is not required, elements 6, 12 and 13 can be omitted.

The decontamination of the oil and/or fluid can be carried out in a closed circuit on line on an apparatus in working conditions (such as an electrical transformer) or within a container or in an open circuit off-line with two separated containers.

The oil can be pre-heated (50—100°C) or can be heated by means of a heating device placed on the inlet pipe for the contaminated oil.

The reactive bed comprises an alkaline-earth carbonate or bicarbonate on which is adsorbed a liquid film consisting of polyethylene glycols of the formula

$$R\left[O\overset{R_1}{\underset{R_2}{(C)_X}}\right]_n OH$$

wherein X is ≥2 and n is an integer of 2 to 400; R may be hydrogen, a straight or branched-chain $C_1$—$C_{20}$ alkyl group, an aralkyl or acyl group;

$R_1$ and $R_2$, which may be the same or different from one another, represent hydrogen, straight or branched-chain alkyl group, possibly substituted $C_5$—$C_8$ cycloalkyl or aryl group;

or, alternatively, the liquid phase comprises polymers obtained by condensation of various alkene oxides in different proportions and, for example, of ethylene oxide and propylene oxide (Nixolen®).

Said adsorbed liquid film may also contain alkaline or alkaline-earth peroxides or alkaline persalts (persulphates or perborates) and, possibly, a base selected from the group consisting of alkaline or alkaline-earth metal hydroxides and $C_1$—$C_6$ alcoholates of the same metals. Alumine may also be used as the solid carrier but in this case the use of a base—otherwise optional—is required. The carbonates or bicarbonates act, in fact, not only as the physical carriers but also participate in the reaction to promote it.

During the reaction, in addition to chemically destroying the polyhalogenated compounds, the decontaminating bed also operates to achieve a dehumidification, a deacidification, a capture of the suspended particles, an improvement in aspect of the fluid, which results in improving its dielectric characteristics. Thus, by applying the continuous closed circulation process, the column may consist of a cartridge which, when placed in closed and/or open cycle to a running transformer, is effective for recycling the dielectric fluid thereof, continuously decontaminating it and improving its characteristics. Such an apparatus may be left in a mounted state until PBC contents will drop below the limits prescribed by law.

The dehalogenation rate that is obtainable by the use of the reactive bed according to the invention is high even at room temperature and it increases with the halogenation level of the substrate; thus, for example, firstly the most chlorinated and, therefore, most toxic polychlorobiphenyls will be degraded. During the reaction, the initially white bed gradually turns to dark-black; the reaction products are, in fact, retained on the bed to be then further oxidized. The exhausted bed is, however, not dangerous since the aromatic polyhalogenated compounds have been transformed completely to the analogous phenols, polyphenols, phenolethers and/or the corresponding hydrocarbons with production of the alkaline or alkaline-earth halide. The starting reactive bed itself consists of nontoxic, low cost substances and is prepared by adding the solid carrier to the other components in the absence of solvents and possibly under vacuum, or to a solution of the other components (PEG or polymers of the Nixolen® type, oxidizing agent and a base) in an alcohol having at least 4 carbon atoms, such as, for example, terbutyl alcohol or butylcellosolve, and then removing the solvent by evaporation.

As an alternative, the solution of the base and the oxidizing agent in polyethylene glycol may be sprayed in a finely divided form and by heat on the solid carrier. Polarity of the liquid film shall be a function of the polarity of the fluid to be treated, in order to prevent the carrier from being washed out by the fluid.

The so prepared bed is in the form of a hygroscopic non-powdery solid, with 10 to 200 mesh particle-size, (2—0.075 mm) which is indefinitely stable even when in contact with air, provided that too high a water absorption from the surroundings should be prevented.

Quantities in weight per cent of the reactive bed components generally range from 60% to 90% for the solid carrier, from 5% to 25% for the polyethylene glycol (Carbowax®, Nixolen®, etc...), from 0% to 5% for the oxidizing agent (sodium peroxide, sodium perborate, etc...), and from 0% to 15% for the base (sodium or potassium hydroxides, potassium terbutylate, etc...). An especially preferred composition is one that particularly comprises, in per cent by weight, 2–1% of sodium peroxide, 8.7% of Carbowax® 6000 and 2.1% of potassium terbutylate, with 86.9% of anhydrous potassium carbonate as the solid carrier.

Devices that are suitable for containing the reactive beds of the invention may be of any appropriate form and size according to the particular application concerned, and they will be made from a material that is inert towards the components of the reagent to be contained therein, such as, for example, a stainless steel.

Filling and packing of said devices with the reactive beds are performed according to conventional methods.

The following non restrictive examples, further describe the invention and the results that are achieved thereby.

In these examples, a reactive bed has been charged to a treating column and used for effecting chemical destruction of the considered contaminant in two different ways:

1. Oil to be decontaminated was supplied by means of a pump to the column and the effluent oil from this was sent back into the same receptacle in which it was contained initially; a continuous circulation of the oil over the same bed was thus effected and maintained until a gas-chromatography analysis indicated that the pollutant content had been brought down to the desired level. The time required for this result to be obtained will obviously depend upon both the dehalogenating ability (as related to the quantity of treated fluid) of the bed, and the reaction temperature (which may also be the room temperature).

2. The contaminated oil is supplied by means of a pump to the column in a continuous manner and is collected in a receptacle other than the one used at the start of the cycle; introduction of oil into the column is stopped when gas-chromatography analysis of all of the collected fluid shows that the contaminant preset threshold is about to be attained; optimization of the process is obtained, once the contaminant

content of the fluid and the dehalogenating capacity of the bed are known, by correspondingly setting the operating temperature and the flow rate of liquid through the bed (lower flow rate giving best results).

Example 1
Preparation of the reactive bed

20.0 Grams of Carbowax® 6000 (PEG at $\overline{PM}$ =6000) and 5.0 g of potassium tert-butylate were dissolved in 200 ml of tert-butylic alcohol. 5.0 of $Na_2O_2$ and 200 g of anhydrous $K_2CO_3$ were then added to this solution. Then, the solvent was removed by evaporation at reduced pressure firstly by means of a water pump and thereafter by the aid of an oil pump.

Example 2
Chemical destruction of PCBs contained in an oil used in high and mean voltage, electric power-transformers (continuous closed process for application directly in situ).

100 ml of a mineral oil (Isovoltine®) contaminated with 100 ppm PCBs (Ascarel®) was supplied to a column (1=40 cm, ϕ=1.5 cm) thermostated at 60°C and containing 30 g of a reactive bed prepared as in Example 1, at a flow rate of 120 ml/h. The effluent oil form the column was returned to the starting vessel contents of which were maintained under magnetic stirring. Periodic analysis by gas-chromatography of the PCBs content of the oil in the vessel showed that concentration thereof was dropped to 350 ppm after two hours and to 46 ppm after 12 hrs.

Example 3
Chemical destruction of PCBs contained in an oil used in high and mean voltage electric power-transformers (continuous open process).

Mineral oil (Isolvoltine®) containing 1000 ppm of PCBs (Ascarel®) was supplied to a column (1=40 cm, ϕ=1.5 cm) containing 30 g of reactive bed prepared as in Example 1, by the aid of a pump. When operating at 60°C and 120 ml/h flow rate, the first 150 ml of oil collected at the column outlet showed a PCBs concentration of 550 ppm, while operation at 90°C and 60 ml/h flow rate gave a PCBs concentration of 38 ppm (as shown by gas-chromatography) in the first 150 ml of collected oil.

$^1$H-NMR analysis of this decontaminated oil showed a hardly noticeable PEG content (<1%).

After rejection of these first 150 ml, the oil flow rate through the colum was maintained until difference in PCBs content between the oil entering the column and the oil flowing out (about 500 ml) thereof was no longer observed. Then, the exhausted bed was removed from the column, dissolved in 500 ml water and, following to acidification with nitric acid, it was analyzed potentiometrically as to its $Cl^-$ content using an $Ag/Ag^+$ electrode, by titration with $Ag^+$ 0.1 N. 1.02 mmoles of $Cl^-$ was found, which, as compared with the used PCBs (about 50 per cent by weight of Cl), corresponds to the decomposed PCBs fraction, assuming that all of the aromatic Cl atoms should have reacted.

Example 4
Comparing different types of reactive beds

Different types of reactive beds were tested by operating under the same processing conditions as in Example 3, at 90°C and 60 ml/h flow rate, with analysis only effected on the first 150 ml of oil collected at the column outlet. The following are some of the results that were obtained.

A. A bed was prepared as in Example 1 but with no $Na_2O_2$ contained therein. PCBs concentration: 350 ppm.

B. A bed was prepared as in Example 1 but with $Na_2O_2$ being added in a finely divided form following removal of solvent by evaporation. PCBs concentration: 500 ppm.

C. A bed was prepared as in Example 1 but with use of tetrahydrofuran, in lieu of tert-butylic alcohol, as the solvent. PCBs concentration: 700 ppm.

D. A bed was prepared as in Example 1 but with no potassium tert-butylate being contained therein. PCBs concentration: 380 ppm.

E. A bed prepared as in Example 1 but without using Carbowax® 6000. No reaction was observed.

F. A bed was prepared as in Example 1 but without $Na_2O_2$ added, using methy alcohol instead of the tert-butylic alcohol, and potassium hydroxide (2.6 g) in lieu of the potassium tert-butylate. PCBs concentration: 770 ppm.

G. A bed was prepared as in Example 1, but with Nixolen® VS 2600 ($\overline{PM}$=5400) being used in lieu of the Carbowax® 6000. PCBs concentration: 42 ppm.

H. A bed comprising 12.5% of $CH_3ONa$ and 25% of Carbowax® 6000 on $K_2CO_3$ was prepared in the absence of a solvent, under vacuum. PCBs concentration: 110 ppm.

**Claims**

1. A device for use in decontaminating polyhalogenated compound-containing fluids, comprising a column or cartridge made of an inert material and in which a reactive bed is contained, said reactive bed comprising an alkaline or alkaline-earth carbonate or bicarbonate having a liquid film supported thereon, said liquid film consisting of polyethylene glycols of the formula

$$R\left[O\overset{\displaystyle R_1}{\underset{\displaystyle R_2}{(C)_x}}\right]_n OH$$

wherein

X is ≥2 and n is an integer of 2 to 400;

R may be hydrogen, straight or branched-chain $C_1$—$C_{20}$ alkyl group, aralkyl or acyl group;

$R_1$ and $R_2$, which may be equal to, or different

from one another, represent hydrogen, straight or branched-chain lower alkyl group, possibly substituted $C_5$—$C_8$ cycloalkyl, aryl or possibly substituted aryl group;

or of condensation polymers of different alkene oxides in various proportions, and an oxidizing agent or radical source selected from the alkaline or alkaline-earth peroxides or persalts.

2. The device according to claim 1, wherein the reactive bed contains a base selected from the group comprising the alkaline or alkaline-earth hydroxides or alkaline $C_1$—$C_6$ alcoholates.

3. The device according to claim 1, wherein the reactive bed comprises from 70 to 90 per cent by weight of a solid support, from 0 to 5 per cent by weight of an oxidizing agent, from 0 to 15 per cent by weight of a base, and from 5 to 25 per cent by weight of polyethylene glycols or of a polymer formed from alkene oxides.

4. The device according to claims 1—3, wherein the reactive bed comprises 86.9 per cent by weight of anhydrous potassium carbonate, 8.69 per cent by weight of polyethylenglycol having a mean molecular weight of 6000, 2.1 per cent by weight of sodium peroxide and 2.1 per cent by weight of potassium terbutylate.

5. The device according to claims 1—3, wherein the reactive bed contains from 40 to 5 per cent by weight of condensation polymers of alkene oxides.

6. A method of continuously decontaminating polyhalogenated compound-containing fluids which comprises causing the fluid to pass through the device of claims 1—5 at temperatures ranging from the room temperature to the working temperature of the apparatus containing said fluid.

7. The method according to claim 6, wherein the fluid to be processed is a chlorobiphenyl-contaminated dielectric oil leaving electric accumulators or transformers or other high, mean or low voltage electrical apparatus, and wherein the contaminated oil is caused to circulate through the device of claims 1—5 once or several times according to a preset decontamination level to be attained.

8. The method according to claims 6 and 7 wherein the processing operation is carried out in a closed system, and the fluid is caused to circulate, by means of a pump operated by an analyzing control unit, from the electrical apparatus containing the fluid to be processed to said device and back to the electrical apparatus, in an automatic way, even during operation of said electrical apparatus.

9. A method of improving dielectric characteristics of an oil used in transformers and the like electrical apparatus wherein said oil is caused to pass through the device according to claims 1—5.

10. A process for preparing a reactive bed for use with the device of claims 1—5, wherein the process comprises adding the solid support to the other reactive components in the absence of a solvent and possibly under vacuum, or to a solution of the other reactive components in a possibly functionalized alcohol having at least 4 carbon atoms, and, finally, evaporating the solvent at reduced pressure.

11. The process according to claim 10, wherein the solvent is ter-butylic alcohol or butylcellosolve.

12. A process for preparing a reactive bed for use with the device of claims 1—5, wherein the process comprises spraying the solid support, under heat action and in a finely divided form, with a solution of a base and an oxidizing agent in polyethylene glycol or an alkene oxide polymer.

**Patentansprüche**

1. Vorrichtung zur Verwendung beim Decontaminieren von polyhalogenierte Verbindung enthaltenden Flüssigkeiten, umfassend eine Säule oder Patrone, hergestellt aus einem inerten Material und in der ein reaktives Bett enthalten ist, wobei das genannte reaktive Bett ein Alkali- oder Erdalkali-Carbonat oder Bicarbonat umfasst, mit einem Flussigkeitsfilm darauf festgehalten, wobei der genannte Flüssigkeitsfilm aus Polyethylenglycolen der Formel besteht

$$R\left[O\left(\overset{\displaystyle R_1}{\underset{\displaystyle R_2}{C}}\right)_x\right]_n OH$$

worin

X≥ 2 ist und n eine ganze Zahl von 2 bis 400 ist;

R Wasserstoff, eine geradketttige oder verzweigte $C_1$—$C_{20}$ Alkylgruppe, Aralkyl oder Arylgruppe sein kann;

$R_1$ und $R_2$, die gleich oder verschieden voneinander sein können, Wasserstoff darstellen, eine geradkettige oder verzweigte niedere Alkylgruppe, eine gegebenenfalls substituierte $C_5$—$C_8$ Cycloalkyl, Aryl oder gegebenenfalls substituierte Arylgruppe;

oder aus Kondensationspolymeren von verschiedenen Alkenoxiden in unterschiedlichen Verhältnissen, und ein oxidierendes Mittel oder eine Radikalquelle, ausgewählt aus Alkali- oder Erdalkali-Peroxiden oder Persalzen.

2. Die Vorrichtung nach Anspruch 1, worin das reaktive Bett eine Base enthält, ausgewählt aus der Gruppe, die Alkali- oder Erdalkali-Hydroxide oder Alkali- $C_1$—$C_6$-Alkoholate umfasst.

3. Die Vorrichtung nach Anspruch 1, worin das reaktive Bett 70 bis 90 Gew.-% eines festen Stützmaterials, 0 bis 5 Gew.-% eines oxidierenden Mittels, 0 bis 15 Gew.% einer base und 5 bis 25 Gew.% Polyethylenglycole oder eines Polymers aus Alkenoxiden umfasst.

4. Die Vorrichtung nach einem oder mehreren der Ansprüche 1 bis 3, worin das reaktive Bett 86,9 Gew.-% wasserfreien Kaliumcarbonate, 8,69 Gew.-% Polyethylenglycol mit einem mittleren Molekulargewicht von 6.00, 2,1 Gew.-% Natriumperoxid und 2,1 Gew.-% Kalium-t-butylat enthält.

5. Vorrichtung nach einem oder mehreren der Ansprüche 1 bis 3, worin das reaktive Bett 40 bis 5 Gew.-% Kondensationpolymere von Alkenoxiden enthält.

6. Ein Verfahren zum ununterbrochenen Dekontaminieren polyhalogenierte Verbindungen enthaltenden Flüssigkeiten, das umfasst, die Flüssigkeit durch die Vorrichtung nach den Ansprüchen 1 bis 5 fliessen zu lassen bei Temperaturen im Bereich von Raumtemperatur bis zur Arbeitstemperatur des Gerätes, das die genannte Flüssigkeit enthält.

7. Das Verfahren nach Ansprüch 6, wobei die Flüssigkeit, die dem Verfahren unterzogen werden soll, ein Chlorobiphenyl - enthaltendes, dielektrisches Öl ist, das aus elektrischen Accumulatoren oder Transformatoren oder anderen elektrischen Apparaten mit hoher, mittlerer oder niedriger Spannung austritt, un wobei man das kontaminierte Öl einmal oder mehrere Male je nach dem zu erreichenden vorgegebenen Dekontaminationslevel durch die Vorrichtung der Ansprüche 1—5 zirkulieren lässt.

8. Das Verfahren nach den Ansprüchen 6 und 7, worin der Verfahrensablauf in einem geschlossenen System durchgeführt wird, und man die Flüssigkeit mittels einer Pumpe, überwacht durch eine Analyse-Kontroll-Einheit, von dem elektrischen Apparat, der die Flüssigkeit enthält, die in der genannten Vorrichtung behandelt werden soll, und zurück zu dem elektrischen Apparat automatisch sogar während des Betriebs des genannten elektrischen Geräts zirkulieren lässt.

9. Ein Verfahren zur Verbesserung der dielektrischen Eigenschaften eines Öls, dans in Transformatoren und ähnlichen elektrischen Apparaten verwandt wird, wobei man das genannte Öl durch eine Vorrichtung gemäss einem oder mehrerer der Anspruche 1 bis 5 fliessen lässt.

10. Ein Verfahren zur Herstellung eines reaktiven Bettes zur Verwendung in der Vorrichtung der Ansprüche 1 bis 5, worin das Verfahren Zufügen des festen Stützmaterials zu den anderen reaktiven Komponenten, in Abwesenheit eines lösungsmittels und gegebenenfalls unter Vakuum, oder zu einer Lösung der anderen reaktiven Komponenten in einem gegebenenfalls funktionalisierten Alokohol mit wenigstens 4 Kohlenstoffatomen, und letztendlich Verdampfen des Lösungsmittels unter reduziertem Druck umfasst.

11. Das Verfahren nach Anspruch 10, worin das Lösungsmittel t-Butylalkohol oder Butylcellosolve ist.

12. Ein Verfahren zur Herstellung eines reaktiven Bettes zur Verwendung in der Vorrichtung der Ansprüche 1 bis 5, worin das Verfahren Besprühen des festen Stützmaterials unter Hitzeeinwirkung und in feinverteilter Form mit einer Lösung einer Base und einem oxidierenden Mittel in Polyethylenglycol oder einem Alkenoxidpolymer umfasst.

**Revendications**

1. Dispositif destiné à etre utilisé pour la décontamination de fluides contenant un composé polyhalogéné, comprenant une colonne ou cartouche constituée d'une matière inerte et contenant un lit réactif, ce dernier comprenant un bicarbonate ou un carbonate de métal alcalin ou alcalino-terreux, portant un film liquide, ce film liquide étant constitué par des polyéthylène glycols de formule

$$R\left[O\left(\begin{array}{c}R_1\\|\\C\\|\\R_2\end{array}\right)_x\right]_n OH$$

dans laquelle

X est ≥2 et n est un nombre entier de 2 à 400;

R peut être hydrogène, groupe alkyle linéaire ou ramifié comportant de 1 à 20 atomes de carbone, groupe aralkyle ou groupe acyle:

$R_1$ et $R_2$, qui peuvent être indentiques ou différrents, représentent hydrogène, groupe alkyle inférieur linéaire ou ramifié, groupe cycloalkyle comportant 5 à 8 atomes de carbone et éventuellement substitué, groupe aryle ou groupe aryle éventuellement substitué;

ou des polymères de condensation de différents oxydes d'alcène dans diverses proportions, et un agent oxydant ou une source de radicaux choisi parmi les peroxydes ou les persulfates de métal alcalin ou alcalino-terreux.

2. Dispositif selon la revendication 1, dans lequel le lit réactif contient une base choisie dans le groupe comprenant les hydroxydes de metal alcalin ou alcaline terreux et les alcoolates en $C_1$—$C_6$ de métal alcalin.

3. Dispositif selon la revendication 1, dans lequel le lit réactif comprend de 70 à 90% en poids d'un support solide, de 0 à 5% en poids d'un agent oxydant, de 0 à 15% en poids d'une base et de 5 à 25% en poids de polyéthylène glycols ou d'un polymère formé à partir d'oxydes d'alcène.

4. Dispositif selon les revendications 1 à 3, dans lequel le lit réactif comprend 86,9% en poids de carbonate de potassium anhydre, 8,69% en poids de polyéthylène glycol ayant un poids moléculaire moyen de 6000, 2,1% en poids de peroxyde de sodium et 2,1% en poids de tert.-butylate de potassium.

5. Dispositif selon les revendications 1 à 3, dans lequel le lit réactif contient de 40 à 5% en poids de polymères de condensation d'oxydes d'alcène.

6. Procédé pour la décontamination en continu de fluides contenant un composé polyhalogéné, qui comprend les étapes consistant à faire circuler le fluide à travers le dispositif selon les revendications 1 à 5, à des températures situées dans l'intervalle allant de la température ambiante à la température de fonctionnement de l'appareil contenant ledit fluide.

7. Procédé selon la revendication 6, dans lequel le fluide à traiter est une huile diélectrique

contaminée par du chlorobiphényle et provenant d'accumulateurs ou de transformateurs électriques ou d'un autre appareil électrique haute, moyenne ou basse tension et dans lequel l'huile contaminée est amenée à circuler, une ou plusieurs fois selon le degré de décontamination prédéterminé à obtenir, à travers le dispositif selon les revendications 1 à 5.

8. Procédé selon les revendications 6 et 7, dans lequel le traitement est effectué dans un système fermé et dans lequel le fluide est amené à circuler, au moyen d'une pompe actionnée par une unité de commande, depuis l'appareil éléctrique contenant le fluide à traiter jusqu' audit dispositif puis retour vers l'appareil électrique, de manière automatique, même durant le fonctionnement dudit appareil électrique.

9. Procédé pour améliorer les caractéristiques diélectriques d'une huile utilisée dan des transformateurs et appareils électriques similaire, dans lequel la dite huile est amenée à circuler à travers le dispositif selon les revendications 1 à 5.

10. Procédé de préparation d'un lit réactif destiné à être utilisé dans le dispositif selon les revendications 1 à 5, comprenant les étapes consistant à ajouter le support solide aux autres composants réactifs en l'absence de solvant et éventuellement sous vide, ou à une solution des autres composants réactifs dans un alcool portant éventuellement des fonctions et comportant aux moins 4 atomes de carbone, puis à évaporer le solvant sous pression réduite.

11. Procédé selon la revendication 10, dans lequel le solvant est l'alcool tert.-butylique ou le butylcellosolve.

12. Procédé pour préparer un lit réactif destiné à etre utilisé dans le dispositif selon les revendications 1 à 5, comprenant les étapes consistant à pulvériser sur le support solide à chaud et sous une forme finement divisée, une solution d'une base et d'un agent oxydant dans un polyéthylène glycol ou un polymère d'oxydes d'alcène.

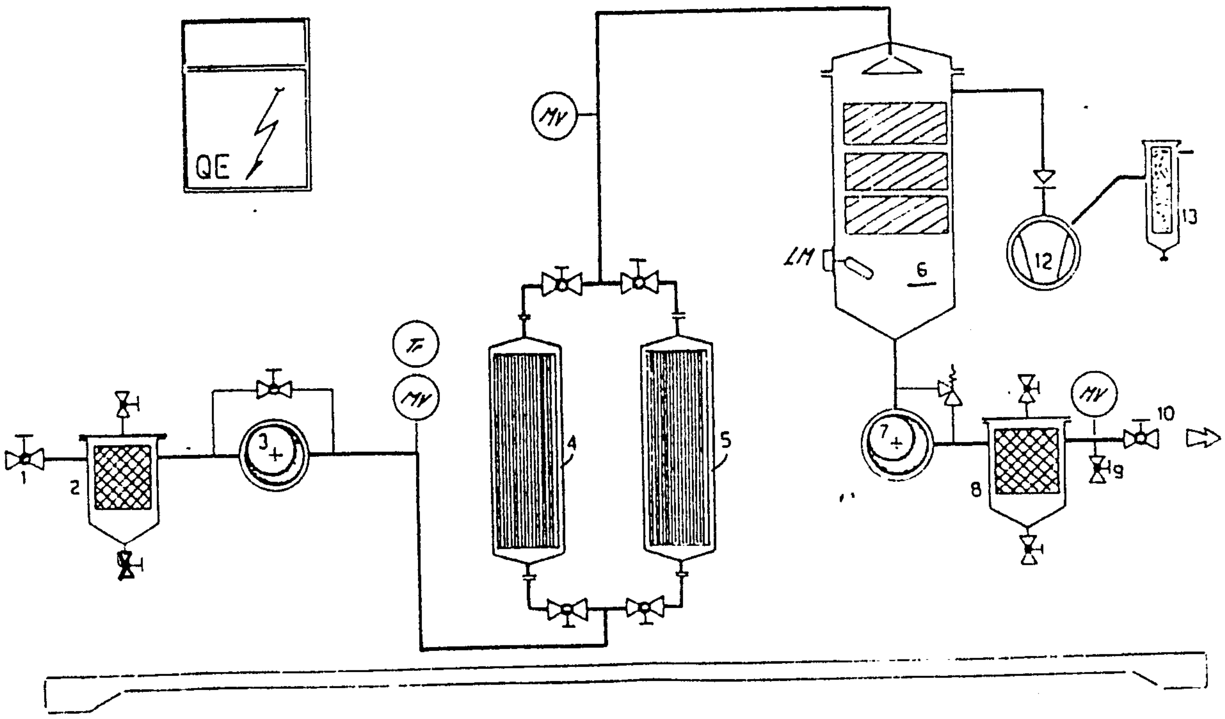
QE
MV
TF
MV
MV
LM
1
2
3
4
5
6
7
8
9
10
12
13